# EUROPEAN PATENT APPLICATION

(11) **EP 3 029 951 A2**
(43) Date of publication of application: **08.06.2016**
(21) Application number: 15196564.7
(22) Date of filing: 26.11.2015
(51) Int. Cl.: H04N 21/482, H04N 21/478

(54) **ELECTRONIC APPARATUS AND METHOD FOR CONTROLLING ELECTRONIC APPARATUS**

(30) Priority: 03.12.2014 KR 20140172325
(71) Applicant: Samsung Electronics Co., Ltd., Gyeonggi-do 16677 (KR)
(72) Inventor: KIM, Seok-hyun, Gyeonggi-do (KR); CHO, Bong-hyun, Gyeonggi-do (KR); HYEON, Su-gyeong, Daegu (KR)
(74) Representative: Hewett, Jonathan Michael Richard

(57) **Abstract**

An electronic apparatus and a controlling method thereof are provided. The controlling method of the electronic apparatus includes displaying a UI related to a sports content and in response to a game execution command being input through the UI, executing a game application corresponding to the sports content using metadata regarding the sports content

## Description

The present invention relates to an electronic apparatus and a method for controlling the electronic apparatus, and more particularly, to an electronic apparatus for executing a game application which allows a user to play a game under the same conditions as sports contents and a method for controlling the electronic apparatus.

Recently, sports games applications are produced based on the real sports games and provided to users. Specifically, various information provided on sports games applications, such as information on teams, players, sports grounds, etc. are based on information on real sports teams, players and sports grounds.

Meanwhile, according to related art sports games applications, a user needs to personally choose settings to play a game. For example, a user should select his or her team or players manually in order to play a game.

Accordingly, a method to provide a user with various game settings for sports games applications automatically is required.

An aspect of the exemplary embodiments of the present invention relates to an electronic apparatus which executes a sports game application corresponding to a sports content automatically using meta data of the sports content, and a method for controlling the electronic apparatus.

According to an exemplary embodiment, there is provided a controlling method of an electronic apparatus including displaying a UI related to a sports content and in response to a game execution command being input through the UI, executing a game application corresponding to the sports content using metadata regarding the sports content.

The metadata regarding the sports content may include at least one of team information, player information, game start time information, sports ground information, and weather information of the sports content.

The executing may include executing the game application by setting a game condition which is the same as at least one of conditions regarding team, player, game start time, sports ground, and weather of the sports content using metadata regarding the sports content.

The method may further include, in response to a simulation command regarding a game corresponding to the sports content being input through the UI, executing a game application corresponding to the sports content using metadata regarding the sports content, and simulating a game corresponding to the sports content through the game application.

The displaying may include displaying an Electronic Program Guide (EPG) screen including a sports broadcast content.

The executing may include, in response to a user command to select a sports broadcast content from among a plurality of broadcast contents included in the EPG screen being input, displaying a menu to execute a game application around the selected sports broadcast content, and in response to the game execution command being input through the menu, executing a game application corresponding to the sports broadcast content using metadata regarding the sports broadcast content.

The method may include, in response to a start time of the sports broadcast content having come while the game application is executed, displaying an indicator for indicating a start of the sports broadcast content.

The displaying may include displaying a schedule UI including schedule information regarding a plurality of sports contents, and in response to a command to select one sports content in the schedule UI, displaying detailed information UI including detailed information regarding the selected sports content.

The executing may include, in response to a game execution icon included in the detailed information UI being selected, executing a game application corresponding to the sports content using metadata regarding the selected sports content.

According to an exemplary embodiment, there is provided an electronic apparatus including a display configured to display a UI related to a sports content, an input unit configured to receive a user command, and a controller configured to, in response to a game execution command being input through the UI, execute a game application corresponding to the sports content using metadata regarding the sports content.

The metadata regarding the sports content may include at least one of team information, player information, game start time information, sports ground information, and weather information of the sports content.

The controller may execute the game application by setting a game condition which is the same as at least one of conditions regarding team, player, game start time, sports ground, and weather of the sports content using metadata regarding the sports content.

The controller, in response to a simulation command regarding a game corresponding to the sports content being input through the UI, may execute a game application corresponding to the sports content using metadata regarding the sports content, and simulate a game corresponding to the sports content through the game application.

The display may display an Electronic Program Guide (EPG) screen including a sports broadcast content.

The controller, in response to a user command to select a sports broadcast content from among a plurality of broadcast contents included in the EPG screen being input, may display a menu to execute a game application around the selected sports broadcast content, and in response to the game execution command being input through the menu, execute a game application corresponding to the sports broadcast content using metadata regarding the sports broadcast content.

The controller, in response to a start time of the sports broadcast content having come while the game application is executed, may display an indicator for indicating a start of the sports broadcast content.

The display may display a schedule UI including schedule information regarding a plurality of sports contents, and the controller, in response to a command to select one sports content in the schedule UI, may display detailed information UI including detailed information regarding the selected sports content.

The controller, in response to a game execution icon included in the detailed information UI being selected, may execute a game application corresponding to the sports content using metadata regarding the selected sports content.

According to the above-described various exemplary embodiments, a user may be provided with a game application corresponding to a sports content which is provided in the real world without any special setting.

The above and/or other aspects of the present invention will be more apparent by describing certain exemplary embodiments of the present inventive concept with reference to the accompanying drawings, in which:
FIG. 1 is a block diagram illustrating configuration of an electronic apparatus briefly according to an exemplary embodiment;
FIG. 2 is a block diagram illustrating configuration of an electronic apparatus in detail according to an exemplary embodiment;
FIGS. 3A to 3D are views provided to explain an exemplary embodiment of executing a game application using an EPG screen according to various exemplary embodiments;
FIGS. 4A to 4D are views provided to explain an exemplary embodiment of executing a game application using a sports game schedule UI according to various exemplary embodiments;
FIG. 5 is a view provided to explain an alarm message according to an exemplary embodiment; and
FIG. 6 is a flowchart provided to explain a controlling method of an electronic apparatus according to an exemplary embodiment.

The exemplary embodiments may vary, and different exemplary embodiments may be combined. Specific exemplary embodiments will be described with reference to accompanying drawings and detailed explanation. However, this does not necessarily limit the scope of the present invention to a specific embodiment form. Instead, modifications, equivalents and replacements included in the technical scope of this specification may be employed. While describing exemplary embodiments, if it is determined that the specific description regarding a known technology obscures the gist of the disclosure, the specific description is omitted.

In the present disclosure, relational terms such as first and second, and the like, may be used to distinguish one entity from another entity, without necessarily implying any actual relationship or order between such entities.

The terms used in the following description are provided to explain a specific exemplary embodiment and are not intended to limit the scope of rights. A singular term includes a plural form unless it is intentionally written that way. The terms, "include", "comprise", "is configured to", etc. of the description are used to indicate that there are features, numbers, steps, operations, elements, parts or combination thereof, and they should not exclude the possibilities of combination or addition of one or more features, numbers, steps, operations, elements, parts or combination thereof. The phrase "at least one of," when followed by a list of two or more items, is an alternative expression denoting a selection of one or more items from the list.

In an exemplary embodiment, 'a module' or 'a unit' performs at least one function or operation, and may be realized as hardware, software, or combination thereof. In addition, a plurality of 'modules' or a plurality of 'units' may be integrated into at least one module and may be realized as at least one processor (not shown) except for 'modules' or 'units' that should be realized in a specific hardware.

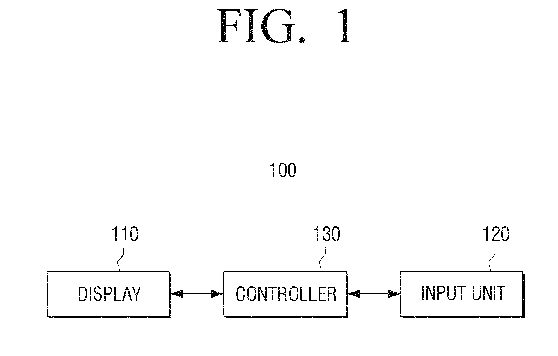

Hereinafter, an exemplary embodiment will be described in detail with reference to the accompanying drawings. FIG. 1 is a block diagram illustrating configuration of an electronic apparatus 100 briefly according to an exemplary embodiment. As illustrated in FIG. 1, the electronic apparatus 100 includes a display 110, an input unit 120 and a controller 130. In this case, the electronic apparatus 100 may be realized as various electronic apparatuses such as smart TV, smart phone, tablet PC, notebook PC, desktop PC, etc.

The display 110 displays various image data under the control of the controller 130. In particular, the display 110 may display a UI related to sports contents. In this case, the UI related to sports contents may be one of EPG and a sports game schedule UI, but this is only an example. The technical feature of the present embodiment may be applied to other UIs related to sports contents.

The input unit 120 receives a user command to control the electronic apparatus 100. In particular, the input unit 120 may receive a game execution command through a UI related to sports contents, which is displayed on the display 110.

The controller 130 controls the overall operations of the electronic apparatus 100. In particular, if a game execution command is input through a UI related to sports contents, the controller 130 may execute a game application corresponding to a sports broadcast content using metadata regarding sports contents.

Specifically, the controller 130 may obtain metadata regarding sports contents from outside. In this case, the sports contents may be sports broadcast contents, and the metadata regarding sports contents may include at least one of team information, player information, game start time information, sports ground information and weather information on the sports contents.

In addition, the controller 130 may control the display 110 to display a UI related to sports contents according to a user command which is input through the input unit 120. For example, the controller 130 may control the display 110 to display one of a EPG screen and a schedule UI according to a user command.

If a game execution command is input through a UI related to sports contents, the controller 290 may execute a game application by setting a game condition which is the same as at least one of team, player, game start time, sports ground, and weather of sports contents using metadata of the sports contents. In addition, if a simulation command with respect to a game corresponding to a sports content is input through a UI, the controller 130 may execute a game application corresponding to the sports content using metadata regarding the sports content and simulate a game corresponding to the sports content through the game application.

According to an exemplary embodiment, the controller 130 may control the display 110 to display an EPG screen for guiding a user to a plurality of broadcast contents in accordance with a user command.

If a sports broadcast content is selected from among a plurality of broadcast contents included in the EPG screen, the controller 130 may control the display 110 to display a menu to execute a game application around the selected sports broadcast content. If a game execution command is input through the menu, the controller 130 may execute a game application corresponding to a sports broadcast content using metadata regarding the sports broadcast content.

If a start time of the sports broadcast content has come while the game application is executed, the controller 130 may control the display 110 to display an indicator for indicating the start of the sports broadcast content.

According to another exemplary embodiment, the controller 130 may control the display 110 to display a schedule UI including schedule information regarding a plurality of sports contents in accordance with a user command. If a command to select one sports content in the schedule UI, the controller 130 may control the display 110 to display detailed information UI including detailed information regarding the selected sports content. If a game execution icon included in the detailed information UI is selected, the controller 130 may execute a game application corresponding to the sports content using metadata regarding the selected sports content.

According to the above-described various exemplary embodiments, a user may be provided with a game application corresponding to a sports content which is provided in the real world automatically without any special setting.

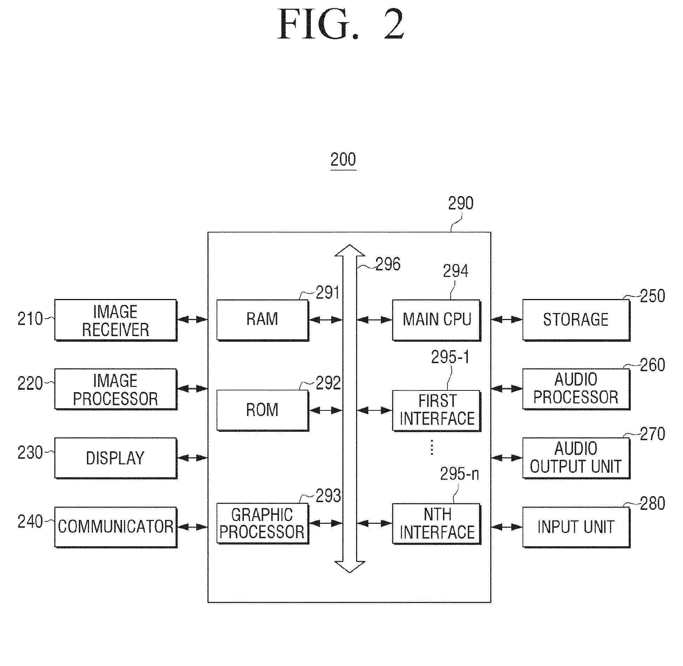

Hereinafter, an electronic apparatus will be described in greater detail with reference to FIGS. 2 to 5. FIG. 2 is a block diagram illustrating configuration of an electronic apparatus 200 in detail according to an exemplary embodiment. As illustrated in FIG. 2, the electronic apparatus 200 includes an image receiver 210, an image processor 220, a display 230, a communicator 240, a storage 250, an audio processor 260, an audio output unit 270, an input unit 280, and a controller 290.

FIG. 2 illustrates various elements in comprehensive manner, assuming that the electronic apparatus 200 provides various functions such as contents providing function, display function, etc. Accordingly, depending on exemplary embodiments, some of the elements illustrated in FIG. 2 may be omitted or changed, and other elements may be added.

The image receiver 210 receives various image contents from outside. Specifically, the image receiver 210 may receive broadcast contents from an external broadcasting station, image contents from an external apparatus (for example, a DVD player, etc.), and VOD contents from an external server.

The image processor 220 processes image data obtained from the image receiver 210. The image processor 220 may perform various image processing operations with respect to image data, such as decoding, scaling, noise filtering, frame rate conversion, resolution conversion, etc.

The display 230 displays at least one of an image content received from the image receiver 210 and various UIs processed by the graphic processor 293. In particular, the display 2230 may display sports contents (for example, sports broadcast contents, sports news article contents, etc.), and display UIs related to sports contents.

The communicator 240 may perform communication with various external apparatuses. In particular, the communicator 240 may include various communication chips such as a WiFi chip, a Bluetooth chip, and an NFC chip. In this case, the Wi-Fi chip, the Bluetooth chip and the NFC chip perform communication according to a LAN method, a Wi-Fi method, a Bluetooth method, and an NFC method, respectively. The NFC chip represents a chip which operates according to an NFC method which uses 13.56MHz band among various RF-ID frequency bands such as 135kHz, 13.56MHz, 433MHz, 860∼960MHz, 2.45GHz, and so on. In the case of using the Wi-Fi chip or the Bluetooth chip, various connection information such as SSID and a session key may be transmitted/received first for communication connection and then, various information may be transmitted/received. The wireless communication chip represents a chip which performs communication according to various communication standards such as IEEE, Zigbee, 3rd Generation (3G), 3rd Generation Partnership Project (3GPP), Long Term Evolution (LTE) and so on.

In particular, the communicator 240 may receive sports contents from outside and may download a game application.

The storage 250 stores various modules to drive the electronic apparatus 200. For example, the storage 250 may store software including a base module, a sensing module, a communication module, a presentation module, a web browser module, and a service module. In this case, the base module refers to a basic module which processes a signal transmitted from each hardware included in the electronic apparatus 200, and transmits the processed signal to an upper layer module. The sensing module is a module which collects information from various sensors, and analyzes and manages the collected information. The sensing module may include a face recognition module, a voice recognition module, a motion recognition module, and an NFC recognition module, and so on. The presentation module is a module to compose a display screen. The presentation module includes a multimedia module for reproducing and outputting multimedia contents, and a UI rendering module for UI and graphic processing. The communication module is a module to perform communication with outside. The service module is a module including various applications for providing various services. For example, the service module may include a sports game application.

As described above, the storage 250 may include various program modules, but some of the various program modules may be omitted or changed, or new modules may be added according to the type and characteristics of the electronic apparatus 200. For example, if the electronic apparatus 200 is realized as a tablet PC, the base module may further include a location determination module to determine a GPS-based location, and the sensing module may further include a sensing module to detect a user's operation.

The audio processor 260 processes audio data. The audio processor 260 may perform various processing with respect to audio data, such as decoding, amplification, noise filtering, etc. The audio data processed by the audio processor 260 may be output to the audio output unit 270.

The audio output unit 270 outputs not only various audio data but also various alarm sounds or voice messages which are processed by the audio processor 260.

The input unit 280 receives a user command to control the overall operations of the electronic apparatus 200. In particular, the input unit 280 may receive a user command to display a UI related to sports contents, a user command to execute a game application, etc.

Meanwhile, the input unit 280 may be realized as a touch panel, but this is only an example. The input unit 280 may be realized as other input apparatuses to control the electronic apparatus 200, such as a remote controller, a pointing device, a mouse, a keyboard, etc.

The controller 290 controls the overall operations of the electronic apparatus 200 using various programs stored in the storage 250.

As illustrated in FIG. 2, the controller 290 includes a RAM 291, a ROM 292, a graphic processor 293, a main CPU 294, a first to nth interface 295-1∼295-n, and a bus 296. Here, the RAM 291, the ROM 292, the graphic processor 293, the main CPU 294, the first to the nth interface 295-1∼295-n, etc. may be interconnected through the bus 296.

The ROM 292 stores a set of commands for system booting. If a turn-on command is input and thus, power is supplied, the main CPU 294 copies O/S stored in the storage 250 in the RAM 291 according to a command stored in the ROM 292, and boots a system by executing the O/S. When the booting is completed, the main CPU 294 copies various application programs stored in the storage 250 in the RAM 291, and executes the application programs copied in the RAM 291 to perform various operations.

The graphic processor 293 generates a screen including various objects such as an icon, an image, a text, etc. using an computing unit (not shown) and a rendering unit (not shown). The computing unit computes property values such as coordinates, shape, size, and color of each object to be displayed according to the layout of the screen using a control command received from an input unit. The rendering unit generates a screen with various layouts including objects based on the property values computed by the computing unit. The screen generated by the rendering unit is displayed in a display area of the display 230.

The main CPU 294 accesses the storage 250, and performs booting using an Operating System (O/S) stored in the storage 250. In addition, the main CPU 294 performs various operations using various programs, contents, data, etc. which are stored in the storage 250.

The first to the nth interface 295-1 to 295-n are connected to the above-described various elements. One of the interface may be network interface which is connected to an external apparatus via network.

In particular, if a game execution command is input using a UI related to a sports content, the controller 290 may execute a game application corresponding to the sports content using metadata regarding the sports content.

According to an exemplary embodiment, if a broadcast content is received, the controller 290 may obtain metadata regarding the broadcast content. In this case, the metadata regarding the broadcast content may include various information such as program name, starring actors, broadcast time, broadcaster information, etc. of the broadcast content. In particular, in the case of a sports broadcast content, the metadata may include at least one of team information, player information, game start time information, sports ground information, and weather information regarding a game corresponding to the sports broadcast content.

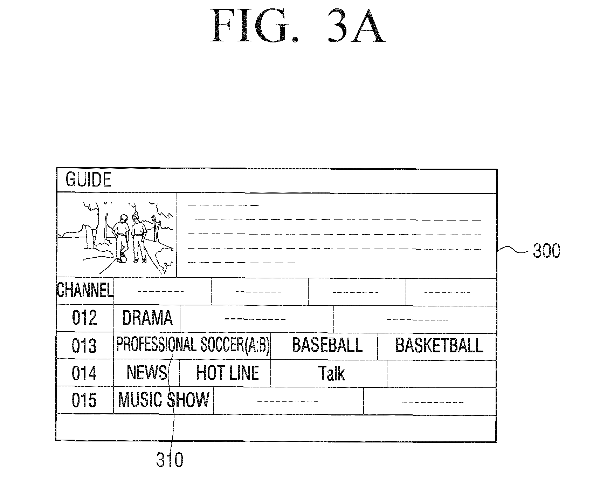

If a user command to display an EPG screen is input through the input unit 280, the controller 290 may control the display 230 to display an EPG screen 300 using metadata of a broadcast content as illustrated in FIG. 3A. In this case, the EPG screen 300 may include items corresponding to a plurality of broadcast contents.

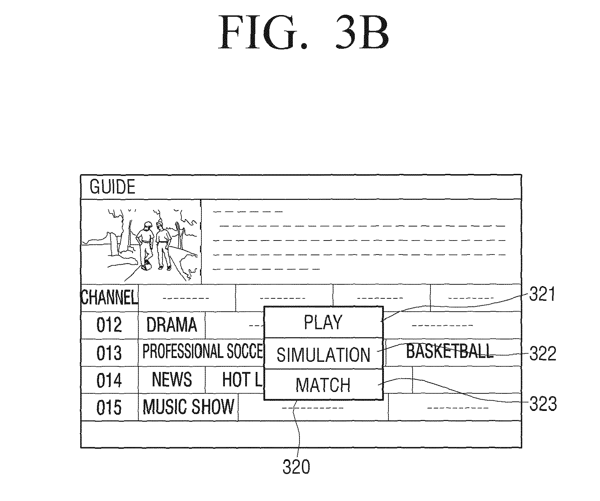

If a sports broadcast content (for example, professional soccer A:B) is selected while the EPG screen 300 is displayed, the controller 290 may control the display 230 to display a menu 320 to provide services related to the sports broadcast content around the selected sports broadcast content as illustrated in FIG. 3B. The menu 320 to provide services related to the sports broadcast content may include a play icon 320, a simulation icon 322, and a match information icon 323 as illustrated in FIG. 3B.

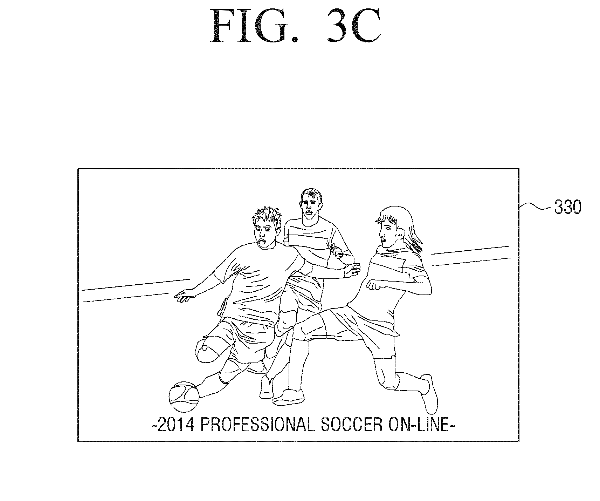

If the play icon 321 is selected from among a plurality of icons included in the menu 320, the controller 290 may execute a soccer game application 330 based on metadata regarding the selected sports broadcast content as illustrated in FIG. 3C.

Specifically, if the play icon 321 is selected from among a plurality of icons included in the menu 320, the controller 290 may obtain at least one of team information, player information, game start time information, sports ground information, and weather information based on metadata regarding the selected sports broadcast content. In addition, the controller 290 may execute a soccer game application corresponding to metadata regarding the selected broadcast content, and set at least one condition to be the same as at least one of team information, player information, game start time information, sports ground information, and weather information included in the metadata.

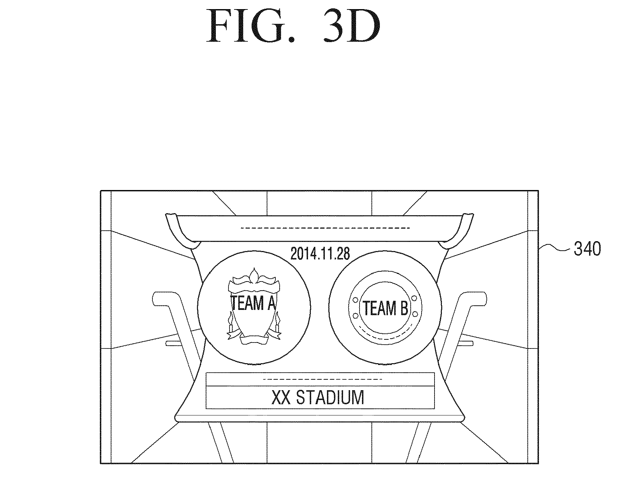

For example, if the game of the sports broadcast content is "a game between team A and team B", the players of "team A" is the first player to the eleventh player, the players of "team B" is the twelfth player to the twenty second player, the game start time is 3 p.m., the sports ground is "home ground of team A", and the weather is clear, the controller 290 may control the display 230 to display a game screen 340 by setting the conditions of the soccer game application such that the game is "a game between team A and team B", the players of "team A" is the first player to the eleventh player, the players of "team B" is the twelfth player to the twenty second player, the game start time is 3 p.m., the sports ground is "home ground of team A", and the weather is clear, as illustrated in FIG. 3D.

If the simulation icon 322 is selected from among a plurality of icons included in the menu 320, the controller 290 may execute a game application corresponding to the sports content using metadata regarding the selected sports broadcast content, and simulate a game corresponding to the sports content using the game application. In this case, simulating a game corresponding to the sports content means that the electronic apparatus 200 simulates a game using team information, player information, etc. which are pre-stored, rather than that a user manipulates a game directly. Accordingly, the user may predict the contents of the game regarding a sports broadcast content based on the pre-stored team information and player information.

If the match information icon 323 is selected from among a plurality of icons included in the menu, the controller 290 may provide a user with game information regarding a sports broadcast content which is selected based on metadata regarding the selected sports broadcast content.

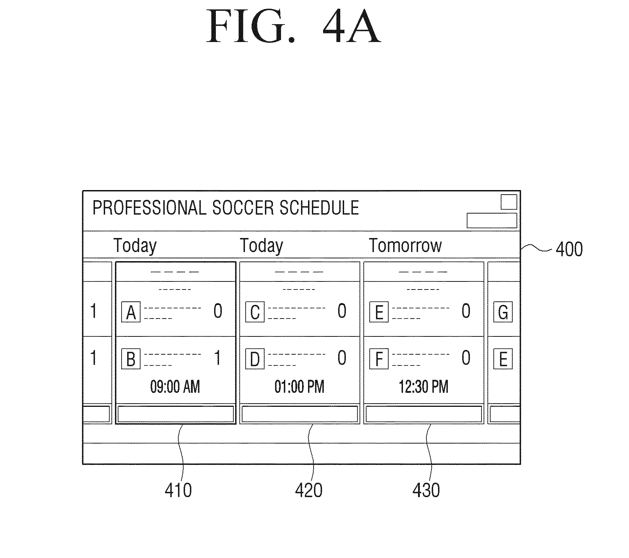

According to another exemplary embodiment, if a user command to generate a sports game schedule UI (for example, a professional soccer schedule UI) is input through the input unit 280, the controller 290 may control the display 230 to display a sports game schedule UI 400 as illustrated in FIG. 4A.

In this case, the sports game schedule UI 400 may include a plurality of display items 410∼430 corresponding to a plurality of sports games. Each of the plurality of display items 410∼430 may include various information such as team information, start time information, sports ground information of sports games, etc.

If a command to select a fist display item 410 from among a plurality of display items included in the sports game schedule UI is input, the controller 290 may control the display 230 to display a detailed information UI 440 including detailed information regarding a sports game corresponding to the selected display item 410.

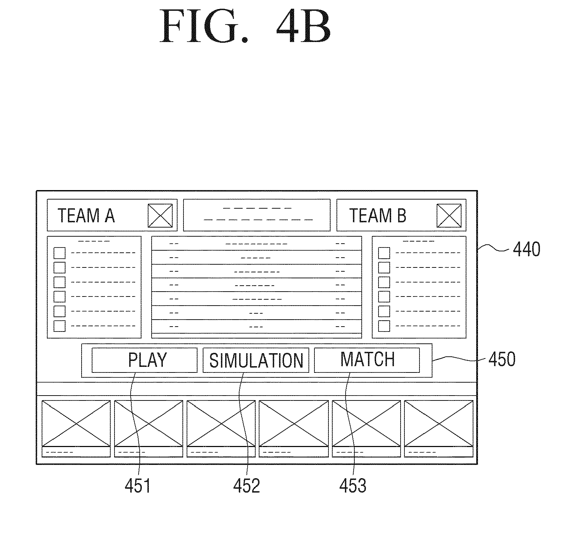

In this case, the detailed information UI 440 may include a menu 450 to provide services related to sports contents. The menu 450 to provide services related to sports contents may include a play icon 451, a simulation icon 452 and a match information icon 453 as illustrated in FIG. 4B.

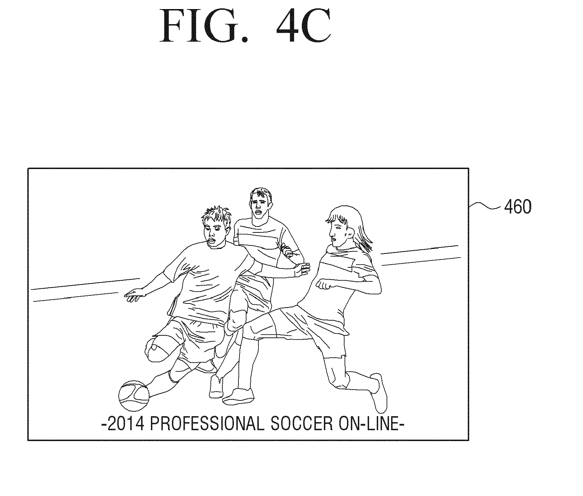

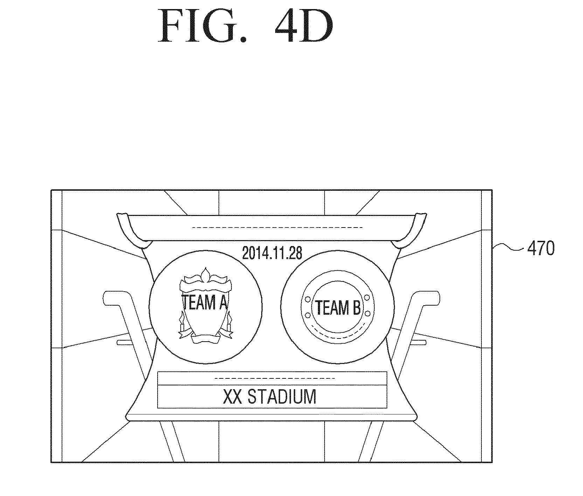

If the play icon 451 is selected from among a plurality of icons included in the menu 450, the controller 290 executes a soccer game application 430 corresponding to a selected sports game based on metadata of the sports game corresponding to the selected display item as illustrated in FIG. 4C, and control the display 230 to display a game screen 440 by setting at least one of the information on team, player, game start time, sports ground and weather of the game application 430 to be the same as at least one of the information on team, player, game start time, sports ground and weather of the selected sports game as illustrated in FIG. 4D. The exemplary embodiment of providing a game application corresponding to a sports game using the menu 450 has been described in detailed above with reference to FIGS. 3A to 3D, so further description will not be provided.

According to the above-described exemplary embodiment, a user may be provided with a game application corresponding to a sports content which is provided in the real world automatically without any special setting.

In addition, if the game time of a real sports game has come while a game application is executed, the controller 290 may control the display 230 to display an indicator for indicating the start of the sports content.

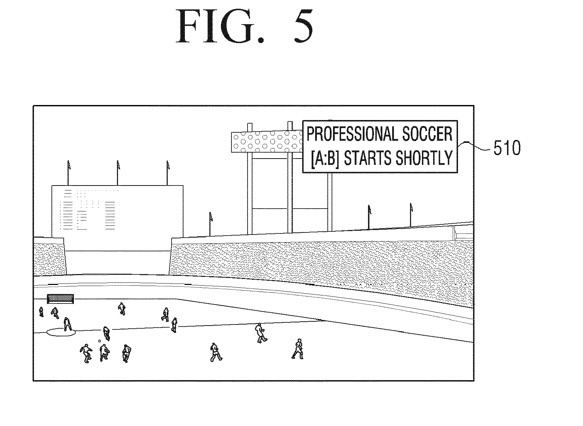

Specifically, if the game start time of a real sports game is 7:00 p.m. and it becomes 7:00 p.m. while a game application is executed, the controller 290 may control the display 230 to display an indicator 510 which indicates the start of the real sports game on one area (for example, on the upper right area) of the display screen as illustrated in FIG. 5.

As described above, by displaying an indicator which indicates the start of a sports game while a game application is executed, a user may not miss the real sports game while enjoying the game application.

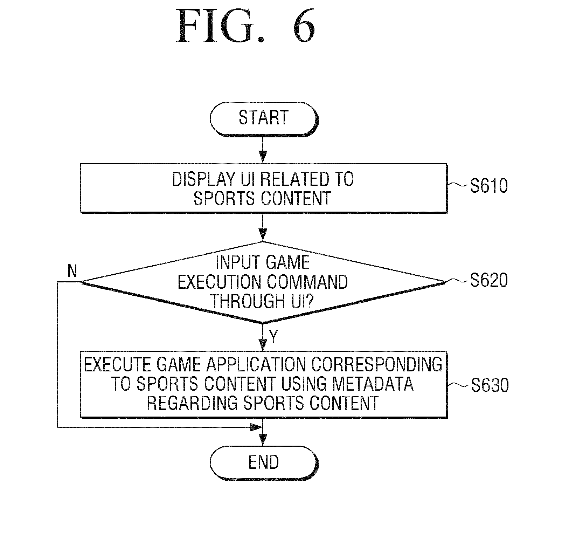

Hereinafter, a controlling method of an electronic apparatus according to an exemplary embodiment will be described with reference to FIG. 6.

First of all, the electronic apparatus 200 displays a UI related to sports contents. In this case, the UI related to sports contents may be an EPG screen including sports broadcast contents or a sports game schedule UI.

The electronic apparatus 200 determines whether a game execution command is input through the UI (S620).

If a game execution command is input (S620-Y), the electronic apparatus 200 executes a game application corresponding to a sports content using metadata of the sports content (S630). Specifically, the electronic apparatus 200 may execute a game application by setting a game condition which is the same as at least one of team, player, game start time, sports ground, and weather of the sports content using metadata of the sports content.

According to the above-described controlling method, a user may enjoy a game application of which setting is the same as the conditions of a real sports game without setting the game of the application one by one.

Meanwhile, the controlling method of an electronic apparatus according to the above-described various exemplary embodiments may be realized as a program and provided in a display apparatus or an input apparatus. In particular, a program including the controlling method of a display apparatus may be stored and provided in a non-transitory computer readable medium.

The non-transitory recordable medium refers to a medium which may store data semi-permanently rather than storing data for a short time, such as register, cache, memory, etc. and is readable by an apparatus. Specifically, the above-described various applications and programs may be stored and provided in a non-transitory recordable medium such as CD, DVD, hard disk, Blu-ray disk, USB, memory card, ROM, etc.

The foregoing embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A controlling method of an electronic apparatus, comprising:
displaying a user interface (UI) related to a sports content; and
in response to a game execution command being input through the UI, executing a game application corresponding to the sports content using metadata regarding the sports content.

2. The method as claimed in claim 1, wherein the metadata regarding the sports content includes at least one of team information, player information, game start time information, sports ground information, and weather information of the sports content.

3. The method as claimed in claim 2, wherein the executing comprises setting a game condition of the game application to at least one of conditions regarding team, player, game start time, playground, and weather of the sports content using metadata regarding the sports content.

4. The method as claimed in one of claim 1 to claim 3, further comprising:
in response to a simulation command regarding a game corresponding to the sports content being input through the UI, simulating the game corresponding to the sports content through the game application.

5. The method as claimed in one of claim 1 to claim 4, wherein
the sports content is a sports broadcast content, and
in the displaying, the UI includes an Electronic Program Guide (EPG) screen including a plurality of broadcast contents, the plurality of broadcast contents including the sports broadcast content.

6. The method as claimed in claim 5, further comprising:
in response to a user command selecting the sports broadcast content from among the plurality of broadcast contents included in the EPG screen being input, displaying a menu to execute a game application around the selected sports broadcast content,
wherein the executing the game application is in response to the game execution command being input through the menu.

7. The method as claimed in claim 5, further comprising:
in response to a start time of the sports broadcast content having come while the game application has been executed, displaying an indicator to indicate a start of the sports broadcast content.

8. The method as claimed in one of claim 1 to claim 7, wherein
in the displaying, the UI includes a schedule UI including schedule information regarding a plurality of sports contents, and
the displaying comprises, in response to a command selecting one sports content from among the plurality of sports content in the schedule UI, displaying a detailed information UI including detailed information regarding the selected sports content.

9. The method as claimed in claim 8, wherein
the executing is performed in response to a game execution icon included in the detailed information UI being selected, and
the sports content in the executing is the selected sports content.

10. An electronic apparatus, comprising:
a display configured to display a user interface (UI) related to a sports content;
a user input receiver; and
a controller configured to, in response to the user input receiver receiving a game execution command input through the UI, execute a game application corresponding to the sports content using metadata regarding the sports content.

11. The apparatus as claimed in claim 10, wherein the controller, in executing the game application, sets a game condition of the game application to at least one of conditions regarding team, player, game start time, playground, and weather of the sports content using metadata regarding the sports content.

12. The apparatus as claimed in claim 11, wherein the controller, in executing the game application, sets a game condition of the game application to at least one of conditions regarding team, player, game start time, playground, and weather of the sports content using metadata regarding the sports content.

13. The apparatus as claimed in one of claim 10 to claim 12, wherein the controller, in response to the user input receiver receiving a simulation command regarding a game corresponding to the sports content input through the UI, and simulates a game corresponding to the sports content through the game application.

14. The apparatus as claimed in one of claim 10 to claim 13, wherein
the sports content is a sports broadcast content, and
the UI is an Electronic Program Guide (EPG) screen including a plurality of broadcast contents, the plurality of broadcast contents including the sports broadcast content.

15. The apparatus as claimed in claim 14, wherein the controller, in response to the user input receiver receiving a user command selecting a sports broadcast content from among a plurality of broadcast contents included in the EPG screen, displays a menu to execute a game application around the selected sports broadcast content, and in response to the game execution command being input through the menu, executes the game application corresponding to the sports broadcast content using metadata regarding the sports broadcast content.
